# EUROPÄISCHE PATENTSCHRIFT

(11) **EP 3 308 068 B1**
(45) Veröffentlichungstag und Bekanntmachung des Hinweises auf die Patenterteilung: **06.02.2019**
(21) Anmeldenummer: 16727691.4
(22) Anmeldetag: 07.06.2016
(51) Int. Cl.: F16L 37/084, B60H 1/00, F24F 13/02, F16L 21/03

(54) **LUFTKANAL**
AIR DUCT
CONDUIT À AIR

(30) Priorität: 09.06.2015 DE 102015109090
(43) Veröffentlichungstag der Anmeldung: 18.04.2018
(73) Patentinhaber: Odenwald Chemie GmbH, 69250 Schönau (DE)
(72) Erfinder: AUGELE, Hans-Peter, 69118 Heidelberg (DE); FEIST, Michael, 69493 Hirschberg (DE); SCHWAMMBERGER, Torsten, 74862 Binau (DE); HOTZ, Dominik, 69250 Schönau (DE); KASTNER, Michael, 38446 Wolfsburg (DE)
(74) Vertreter: Müller Schupfner & Partner Patent- und Rechtsanwaltspartnerschaft mbB
(86) Internationale Anmeldenummer: PCT/EP2016/062866
(87) Internationale Veröffentlichungsnummer: WO 2016/198383

(56) Entgegenhaltungen:
- EP-A1- 1 728 659
- EP-A2- 1 496 301
- DE-A1- 19 744 310
- DE-A1-102007 037 734
- FR-A1- 2 750 755
- JP-A- 2009 262 896

## Beschreibung

Die Erfindung betrifft einen Luftkanal für eine Heizungs-, Lüftungs- und/oder eine Klimatisierungseinrichtung eines Fahrzeugs. Luftführungen bzw. Luftkanäle in Fahrzeugen werden zum Anbinden an weitere Komponenten, beispielsweise an einen weiteren Luftkanal, an ein Verteilergehäuse oder an einen Rohrstutzen, mit Montageelementen ausgestattet. Als Montageelemente werden beispielsweise Kunststoffspritzteile, Kabelbinder, ausgeklebte Schaumteile oder andere separate Teile verwendet. Die Montageelemente müssen häufig fertigungstechnisch aufwendig auf die Luftkanäle adaptiert werden, was zusätzliche Kosten verursacht. Weitere Kosten und zusätzlicher Aufwand entstehen durch einzusetzende Dichtungen. Zudem weisen die bekannten Montageelemente häufig den Nachteil auf, dass dem Monteur keine ausreichende Rückmeldung gegeben wird, ob die Luftführung ausreichend mit dem Anbauteil verbunden ist bzw. ob ein dauerhafter Festsitz gewährleistet ist. Es ist daher schwierig, einen ausreichend dichten Festsitz zuverlässig zu gewährleisten bzw. sicherzustellen. Die FR 2 750 755 A1 offenbart ein Bauteil, das zur Führung von Luft vorgesehen ist. Ferner weist das Bauteil einen rohrförmigen Grundkörper und ein integral bzw. einstückig mit dem rohrförmigen Grundkörper gebildetes und/oder bildbares Verbindungsstück zum formschlüssigen Verbinden mit einem weiteren Bauteil auf. EP 1 728 659 A1 betrifft eine Isolation aus Schaumstoff, die in einen Querträger eingelassen ist und die vor dem Verbauen aus dem Querträger flanschartig übersteht.

Die DE 197 44 310 A1 offenbart eine Dichtungslippe an einem Bauteil, wobei die Dichtungslippe beim Zusammenfügen des Bauteils mit einem weiteren Bauteils umgebogen wird.

In der DE 10 2007 037 734 A1 ist ein Luftströmungskanal aus einem Kunststoffschaum offenbart, wobei sich durch ein Umschlagen des rohrförmigen ein Rand ausbildet.

Die EP 1 496 301 A2 zeigt eine Steckverbindung, die ein Rohr und ein Gegenstück aufweist. Dabei ist das Gegenstück derart ausgestaltet, dass durch ein Umstülpen ein Rohraufnahmebereich beim Zusammenstecken des Rohrs und des Gegenstücks ausgebildet wird. Ferner wird das Gegenstück hierbei nach innen umgestülpt. Weiterhin weist die Steckverbindung eine relative Fixierung zwischen dem Rohr und dem Gegenstück Nutkanten und Rastnasen auf.

Der Erfindung liegt die Aufgabe zugrunde, einen Luftkanal zur Verfügung zu stellen, der einfach und zuverlässig sowie möglichst kostengünstig mit einem weiteren Bauteil, insbesondere einem weiteren luftführenden Bauteil, verbunden werden kann.

Die Aufgabe wird erfindungsgemäß gelöst durch einen Luftkanal mit den Merkmalen des Anspruchs 1 sowie eine Anordnung von Bauteilen gemäß Anspruch 9. Bevorzugte Ausgestaltungen der Erfindung sind Gegenstand der abhängigen Ansprüche und in der nachfolgenden Beschreibung, insbesondere im Zusammenhang mit den beiliegenden Figuren, weiter erläutert.

Der erfindungsgemäße Luftkanal umfasst einen rohrförmigen Grundkörper zum Leiten von Luft und ein integral (einstückig) mit dem rohrförmigen Grundkörper gebildetes oder bildbares Verbindungselement zum formschlüssigen Verbinden mit einem weiteren (zweiten) Bauteil.

Der in der Folge auch als Bauteil bezeichnete Luftkanal ist erfindungsgemäß für eine Heizungs-, Lüftung- und/oder Klimatisierungseinrichtung eines Fahrzeugs vorgesehen. Allgemein ist unter einem luftführenden Bauteil ein Bauteil zu verstehen, das geeignet und dazu vorgesehen ist, Luft von einem ersten Bereich in einem zweiten Bereich zu leiten bzw. zu führen.

Ein Grundgedanke der Erfindung besteht darin, bei einem solchen Bauteil zur Führung eines Elements integral mit dem rohrförmigen Grundkörper ein Verbindungselement (einen Verbindungsabschnitt) zu bilden, insbesondere zu formen, so dass auf separate Montageelemente verzichtet werden kann. Das Verbindungselement und zumindest ein Teil des rohrförmigen Grundkörpers sind also aus einem gemeinsamen Stück bzw. Teil geformt oder stoffschlüssig miteinander verbunden. Das Verbindungselement ist somit zweckmäßigerweise einstückig bzw. unlösbar mit dem rohrförmigen Grundkörper gebildet, wodurch die Zuverlässigkeit der Anbindung des Bauteils an ein weiteres Bauteil erhöht wird. Zudem entfallen Zusatzkosten durch zusätzliche Bauteile (Montageelemente).

Die Erfindung ermöglicht insbesondere das Verbinden von Schaumkanälen oder Kanälen aus anderen vorzugsweise elastischen Materialien untereinander zu Düsen und zu Anschlussstücken.

Das Verbindungselement bzw. der Verbindungsbereich ist vorzugsweise an einer Umfangsfläche des rohrförmigen Grundkörpers, insbesondere einer inneren Umfangs- oder Mantelfläche und/oder einer äußeren Umfangs- oder Mantelfläche angeordnet. Für eine dichte bzw. leckagefreie Verbindung mit dem angrenzenden Bauteil ist vorteilhafterweise vorgesehen, dass das Verbindungselement geeignet ist, eine elastische Bewegung in eine Radialrichtung des Bauteils auszuüben, um in Radialrichtung (nach innen oder nach außen) gegen das anzubindende Bauteil anzudrücken. Vorzugsweise ist das Verbindungselement hierzu aus einem elastischen Material gebildet. Das Verbindungselement bzw. der Verbindungsbereich (umgekrempelter Abschnitt des Bauteils / der Luftführung) bietet vorzugsweise eine Rückhaltefunktion.

Gemäß der Erfindung ist vorgesehen, dass das Verbindungselement durch Umformen des rohrförmigen Grundkörpers hergestellt und/oder herstellbar ist. Das Verbindungselement wird also dadurch gebildet oder geformt, dass der rohrförmige Grundkörper in einem Ausgangs- oder Grundzustand umgeformt wird. Der rohrförmige Grundkörper in dem Ausgangs- oder Grundzustand (vor der Umformung) kann auch als rohrförmiger Ausgangskörper bezeichnet werden. Aus diesem werden durch Umformen der rohrförmige Grundkörper und das integral mit diesem gebildete Verbindungselement hergestellt bzw. geformt. Zur Herstellung des Verbindungselements ist insbesondere vorgesehen, einen axialen Endbereich des rohrförmigen Ausgangskörpers bzw. Grundkörpers umzuformen.

Es ist bevorzugt, dass der rohrförmige Ausgangskörper (Grundkörper in einem Ausgangs- oder Grundzustand) in einem axialen Endbereich einen manuell umformbaren Umformabschnitt aufweist, welcher zu dem Verbindungselement umformbar ist. Der rohrförmige Ausgangskörper ist also derart umformbar, dass durch das Umformen das Verbindungselement gebildet werden kann. In einer ersten Variante ist vorgesehen, dass der Umformabschnitt zum Bilden des Verbindungselements nach außen umformbar oder umbiegbar ist. Hierdurch wird an einer äußeren Umfangsfläche bzw. einem äußeren Umfangsbereich das Verbindungselement gebildet. Das erfindungsgemäße Bauteil kann somit in ein weiteres Bauteil eingesteckt werden. Das Verbindungselement gelangt zum Bilden einer formschlüssigen Verbindung mit einem Eingriffselement des zweiten Bauteils in Eingriff. In einer zweiten Variante ist vorgesehen, dass der Umformabschnitt zum Bilden des Verbindungselements nach innen umformbar oder umbiegbar ist. Dies ermöglicht es, das zweite Bauteil in das erfindungsgemäße Bauteil einzustecken, derart, dass durch Eingriff des Verbindungselements in einen Eingriffsbereich des zweiten Bauteils eine formschlüssige Verbindung herstellbar ist. Grundsätzlich kann auch vorgesehen sein, dass der rohrförmige Ausgangskörper bzw. der Umformabschnitt wahlweise nach außen oder nach innen umformbar ist. Das Verbinden der beiden Bauteile erfolgt also vorzugsweise durch eine Steckung in axialer Richtung.

In einer weiteren bevorzugten Ausführungsform ist vorgesehen, dass das Verbindungselement durch Umkrempeln eines axialen Endbereichs, oder Endabschnitts, des rohrförmigen Grundkörpers bzw. Ausgangskörpers hergestellt und/oder herstellbar ist. Unter einem Umkrempeln ist insbesondere ein Umformen oder Umbiegen des axialen Endes des rohrförmigen Ausgangskörpers in eine rückwärtige oder gegenüberliegende Richtung, also um mehr als 90°, vorzugsweise mindestens 135° zu verstehen. Insbesondere ist vorgesehen, den axialen Endbereich des rohrförmigen Grund- bzw. Ausgangskörpers in Richtung des gegenüberliegenden axialen Endes umzulegen bzw. umzubiegen. Der rohrförmige Ausgangskörper wird vorzugsweise entlang einer definierten Umformlinie umgekrempelt. Das Umkrempeln/Umklappen/Umlegen kann nach außen und/oder nach innen erfolgen.

Eine gute Abdichtwirkung kann dadurch erzielt werden, dass der rohrförmige Ausgangskörper, bzw. der rohrförmige Grundkörper mit dem Verbindungselement, aus einem elastischen Material gebildet ist. Das elastische Material ermöglicht eine radiale Abdichtung, insbesondere analog einem Radialwellendichtring. In einer weiteren bevorzugten Ausgestaltung ist vorgesehen, dass das Verbindungselement elastisch federnd mit dem rohrförmigen Grundkörper verbunden ist. Vorzugsweise ist also zwischen dem rohrförmigen Grundkörper und dem Verbindungselement ein Gelenk oder Scharnier gebildet, das eine elastisch federnde Bewegung des Verbindungselements relativ zu dem rohrförmigen Grundkörper gewährleistet.

Besonders bevorzugt ist es nach der Erfindung, dass der rohrförmige Grundkörper, und dementsprechend vorzugsweise auch das integral mit diesem gebildete Verbindungselement, aus einem geschäumten Material gebildet ist. In einer beispielhaften Ausführungsform handelt es sich bei dem erfindungsgemäßen Bauteil um eine Luftführung bzw. einen Luftkanal aus einer Schaumfolie bzw. einen Schaumfolien-Luftkanal. Vorzugsweise handelt es sich um einen Polyolefin-Schaumstoff (PO-Schaumstoff), beispielsweise PE-Schaumstoff oder PP-Schaumstoff. Das geschäumte Material eignet sich in besonderer Weise zur - insbesondere manuellen - Umformung, insbesondere am Ort der Montage, zur Herstellung des Verbindungselements. Zudem kann aufgrund der Materialeigenschaften eine gute Abdichtung erzielt werden. Schließlich ist das geschäumte Material besonders leicht und wirkt schalldämpfend und/oder schalldämmend. Vorzugsweise handelt es sich um einen geschlossenzelligen Schaumstoff. Die Dichte liegt vorzugsweise im Bereich von 70 - 110 g/dm³, insbesondere 80 - 100 g/dm³, vorzugsweise bei etwa 90 g/dm³.

Zum Verbinden luftführender Bauteile ist es bevorzugt, dass das Verbindungselement geeignet ist, einen Abdichtungszustand zu dem weiteren (zweiten) Bauteil herzustellen. Unter einem Abdichtungszustand ist hierbei insbesondere ein Zustand zu verstehen, der eine ausreichende Abdichtung für ein luftführendes Bauteil einer Fahrzeugheizung, Fahrzeuglüftung und/oder Fahrzeugklimatisierung bereitstellt (insbesondere Dichtigkeit nach Prüfvorschriften von Automobilherstellern, bspw. TL- und VW-Versuchsanforderung).

Zur Unterstützung der Umformung ist erfindungsgemäß vorgesehen, dass der rohrförmige Grundkörper in einem Grundzustand (also der rohrförmige Ausgangskörper) eine zumindest teilweise umlaufende Schwächung, insbesondere Materialschwächung, aufweist, entlang welcher der rohrförmige Grundkörper bzw. Ausgangskörper zum Bilden des Verbindungselements umformbar ist. Insbesondere kann der rohrförmige Grundkörper einen Übergangsabschnitt aufweisen, der ein Scharnier bildet, entlang welchem der rohrförmige Grundkörper zum Bilden des Verbindungselements umformbar ist. Die Materialschwächung weist erfindungsgemäß eine Perforation und/oder eine Wanddickenreduzierung auf. Bevorzugt ist die Materialschwächung durch mindestens einen, insbesondere umlaufenden oder erfindungsgemäß unterbrochenen, Schnitt, insbesondere mindestens einen Einschnitt und/oder Durchschnitt, einem Zackenmesserschnitt bzw. einer zackenförmigen Materialverdünnung und/oder durch eine Materialverdünnung bzw. Wanddickenreduzierung und/oder durch Ausstanzungen und/oder durch Durchstanzungen, insbesondere zum Bilden einer Perforation, insbesondere in Umfangsrichtung, und/oder thermisch verursachte Schwächung gebildet. Eine thermisch verursachte Schwächung kann vorzugsweise durch eine Laserbearbeitung, eine Bearbeitung durch einen Heißdraht oder Heißdorn (ähnlich Lötkolben) erzielt werden. Die Schwächung kann auch durch einen Faltenbalg gebildet sein. Der rohrförmige Ausgangskörper wird durch die Schwächung in den rohrförmigen Grundkörper und einen Umformabschnitt unterteilt. Die Schwächung befindet sich vorzugsweise in einem Endbereich des rohrförmigen Ausgangskörpers. Der Abstand der Schwächung vom axialen Ende beträgt vorzugsweise maximal 50 mm, besonders bevorzugt maximal 15 mm oder maximal 10 mm. Er beträgt vorzugsweise mindestens 5 mm, insbesondere mindestens 10 mm. Insbesondere ist vorgesehen, dass der Abstand zwischen 5 und 15 mm beträgt. Der Abstand der Schwächung vom axialen Ende definiert die axiale Länge des Umformabschnitts bzw. des zu bildenden Verbindungselements. Mit anderen Worten beträgt die axiale Länge des Umformabschnitts bevorzugt 5 und 40 mm. Je länger der Abschnitt (Umformabschnitt bzw. Verbindungselement), desto sicherer ist die Einhaltung der Endposition. Die Schwächung bildet vorzugsweise einen Übergangsabschnitt zwischen Grundkörper und Umformabschnitt bzw. Verbindungselement. Als Übergangsabschnitt kann beispielsweise ein Faltenbalg hervorgesehen sein, der ein flexibles Bewegungselement bildet.

Vorzugsweise beträgt die Länge des Umformabschnitts bzw. der Abstand der Materialschwächung vom axialen Ende des rohrförmigen Grundkörpers (im nicht umgeformten Grundzustand) mindestens das 2-fache, insbesondere mindestens das 3-fache der Materialstärke (Dicke) des rohrförmigen Grundkörpers. Weiter vorzugsweise beträgt die Länge des Umformabschnitts bzw. der Abstand der Materialschwächung vom axialen Ende des rohrförmigen Grundkörpers (im nicht umgeformten Grundzustand) maximal das 10-fache, insbesondere maximal das 6-fache der Materialstärke (Dicke) des rohrförmigen Grundkörpers.

Der rohrförmige Grundkörper (bzw. der Luftkanal) kann als einschaliger Körper ausgebildet sein. Alternativ ist der rohrförmige Grundkörper (bzw. der Luftkanal) bevorzugt aus mindestens zwei miteinander verbundenen Schalen, vorzugsweise Halbschalen, gebildet bzw. weist mindestens zwei Schalen/Halbschalen auf. Die Halbschalen können durch Tiefziehen, Prägen, im FPFT-Verfahren (Fusion-Press-Form-Technology) oder im Twinsheet-Verfahren hergestellt sein. Ein besonderer Aspekt der Erfindung liegt in einem Luftkanal, insbesondere aus geschäumtem Material, der durch tiefgezogene, geprägte oder FPFT-hergestellte Halbschalen gebildet ist oder im Twinsheet-Verfahren hergestellt ist, wobei die Materialschwächung vorzugsweise während des Prozesses der Herstellung der Halbschalen eingebracht wird bzw. ist. Das erfindungsgemäße Bauteil kann grundsätzlich aber auch ein gespritztes oder geblasenes Bauteil, insbesondere mit einer Schaumstruktur, sein.

Zur Herstellung einer Umstülp- oder Umkrempelmöglichkeit bzw. zur Herstellung der Materialschwächung bestehen insbesondere folgende Möglichkeiten:
- Der Grundkörper kann zur Herstellung einer Umstülpmöglichkeit abgeprägt werden bzw. abgeprägt sein (beispielsweise runde oder keilförmige Abprägung). Dabei kann insbesondere ein Scharnier hergestellt werden.
- Es können andere geometrische Anpassungen des Grundkörpers vorgenommen werden. Beispielsweise kann der Grundkörper einen Faltenbalg aufweisen, der eine Umstülpbarkeit gewährleistet. Der Faltenbalg bildet ein flexibles Bewegungselement, ggf. zusätzlich zu einer weiteren Materialschwächung.
- Der Grundkörper kann An- oder Einstanzungen aufweisen. In den Grundkörper können An- oder Einstanzungen eingebracht sein.
- Insbesondere bei tiefgezogenen, geprägten oder FPFT-hergestellten Halbschalen ist es möglich, zumindest ein Einlegeteil vorzusehen, welches in den Grundkörper eingelegt ist, zur Bildung einer Umstülpbarkeit des Grundkörpers. Das mindestens eine Einlegeteil kann zumindest teilweise abgedeckt sein.
- Insbesondere bei Teilen, die im Twinsheet-Verfahren hergestellt sind, kann das Umstülpen beim Tiefziehvorgang durch Einfahren eines Kernes erreicht werden.

Grundsätzlich ist es auch denkbar, das Verbindungselement nachträglich stoffschlüssig mit dem rohrförmigen Grundkörper zu verbinden, beispielsweise durch Aufschweißen und/oder Ankleben des Verbindungselements, z. B. Aufschweißen und/oder Ankleben einer Lippe, insbesondere an einen fertigen Kanal bzw. Luftkanal.

Es ist vorgesehen, dass das Verbindungselement zum Herstellen einer formschlüssigen Verbindung mit einem Eingriffsbereich oder -element des weiteren Bauteils in Eingriff gebracht wird. Bei dem Eingriffsbereich oder -element kann es sich zum Beispiel um eine Vertiefung oder Erhöhung des Bauteils handeln. Beispielsweise kann das Verbindungselement in eine Ausnehmung in dem weiteren Bauteil eingreifen und/oder einen an dem weiteren Bauteil gebildeten Vorsprung hintergreifen. Vorzugsweise ist das Verbindungselement zum Bilden einer Rastverbindung ausgebildet, welche dadurch ermöglicht wird, dass das Verbindungselement elastisch federnd an dem rohrförmigen Grundkörper gelagert ist. Das Verbindungselement kann somit ein Eingriffselement des anderen Bauteils passieren, insbesondere in Axialrichtung des rohrförmigen Grundkörpers, und anschließend durch eine radiale Rückfederbewegung den Eingriffszustand herstellen. Der Eingriffsbereich bzw. das Eingriffselement kann ein Rastelement oder Rasthaken sein.

Für eine erhöhte Dichtwirkung ist es bevorzugt, dass das Verbindungselement in einem Längsschnitt (Schnitt entlang Längsachse des rohrförmigen Grundkörpers) eine gebogene und/oder abgewinkelte und/oder angestellte Form aufweist. Hierdurch kann eine bessere Verkeilung mit einem Eingriffselement des zweiten Bauteils, beispielsweise einem Rastelement oder Rasthaken, erfolgen. Zudem kann durch eine spitzwinkelige Kontur am axialen Ende des Verbindungselements eine verbesserte Abdichtung erzielt werden. Das Verbindungselement erstreckt sich insbesondere ausgehend von einem Übergangsschnitt am Übergang zwischen Grundkörper und Verbindungselement in Richtung des gegenüberliegenden axialen Endes des Grundkörpers, wobei in diese Richtung eine vom Grundkörper wegführende Abwinkelung bzw. Krümmung vorhanden ist.

Das Verbindungselement bildet vorzugsweise eine Dichtlippe zum radialen Anpressen gegen das zweite Bauteil. Das Verbindungselement ist hierzu vorzugsweise aus einem flexiblen und/oder elastischen und/oder rückstellfähigen Material gebildet. Es ist insbesondere entgegen einer Spannkraft gegen den rohrförmigen Grundkörper andrückbar. Eine Spannkraft drückt das Verbindungselement also vorzugsweise vom rohrförmigen Grundkörper weg. Die Dichtlippe wird vorzugsweise durch eine Kante des Verbindungselements gebildet, die radial gegen das zweite Bauteil andrückt.

Es ist bevorzugt, dass das Bauteil mehrere Verbindungselemente aufweist. Mit anderen Worten kann ein durch mehrere Verbindungselemente gebildeter Verbindungsabschnitt vorhanden sein. Die Vielzahl von Verbindungselementen kann in Form von als sich umfänglich angeordneten, zweckmäßigerweise umfänglich beabstandeten Laschen gebildet sein. Es kann ein mehrteiliger, umgekrempelter Abschnitt oder ein mehrteiliges Verbindungselement gebildet sein. Dabei können auch Teilbereiche entlang des Umfangs ausgespart sein, so dass die einzelnen (separaten) Verbindungselemente umfänglich beabstandet sind. Die einzelnen (separaten) Verbindungselemente können insbesondere entlang des Umfangs des Bauteils bzw. rohrförmigen Grundkörpers angeordnet sein. Durch die Mehrzahl von Verbindungselementen bzw. Einkerbungen und/oder Ausschnitte und/oder Einschnitte und/oder eine Materialverjüngung im Verbindungselement/Umkrempelrand kann eine zerstörungsfreie Demontage erzielt werden. Durch Drehen des anzubindenden, zweiten Bauteils (Montageteil) lässt sich eine Überdeckung von Verbindungselement (Umkrempelrand) und Gegenelement (Eingriffsbereich, Rastelement, Rasthaken) außer Eingriff bringen. Um eine Verrastung zu entriegeln, sind insbesondere Ausklinkungen in dem Verbindungselement bevorzugt.

Die Erfindung betrifft des Weiteren eine Anordnung von Bauteilen, wobei ein erstes Bauteil in erfindungsgemäßer Weise ausgebildet ist und wobei das erste Bauteil mit einem zweiten Bauteil formschlüssig verbunden und/oder verbindbar ist.

Das zweite Bauteil kann entlang zumindest eines Teils seines Umfangs ein Rastelement, insbesondere eine Rastnase, aufweisen, mit welcher das Verbindungselement des ersten Bauteils formschlüssig verbunden und/oder verbindbar ist. Es kann insbesondere vorgesehen sein, dass das Verbindungselement das Rastelement des zweiten Bauteils hintergreift. Das Rastelement an dem zweiten Bauteil kann beispielsweise durch eine partielle Materialanreicherung (Bildung einer Wulst, eines Widerhakens, etc.) durch Plastifizieren und/oder Verdrängen gebildet sein.

Insbesondere zur Verbindung von zwei rohrförmigen Luftführungsbauteilen ist es bevorzugt, dass beide Bauteile in erfindungsgemäßer Weise ausgebildet sind. Dabei ist insbesondere vorgesehen, dass beide Bauteile ein integral mit einem rohrförmigen Grundkörper gebildetes und/oder bildbares Verbindungselement zum formschlüssigen Verbinden mit dem jeweils anderen Bauteil aufweisen. Die beiden Bauteile können insbesondere im Wesentlichen gleichartige Verbindungsbereiche oder -elemente, insbesondere durch Umbiegen eines rohrförmigen Ausgangskörpers gebildete Verbindungsbereiche oder -elemente, aufweisen. Vorzugsweise ist das Verbindungselement eines ersten Bauteils durch ein Umbiegen des rohrförmigen Ausgangskörpers nach außen und das Verbindungselement eines zweiten Bauteils durch Umbiegen des rohrförmigen Grundkörpers nach innen gebildet. Die Verbindungselemente der beiden Bauteile sind vorzugsweise durch Bilden einer Rastverbindung miteinander verbindbar.

In einer weiteren bevorzugten Ausgestaltung ist vorgesehen, dass das erste Bauteil lösbar mit dem zweiten Bauteil verbunden und/oder verbindbar ist. Die beiden Bauteile sind also demontierbar. Die Demontage kann insbesondere ohne Lösen und/oder ohne Entfernen eines separaten Verbindungselements erfolgen, beispielsweise indem die Bauteile zunächst gegeneinander verdreht und dann axial voneinander beabstandet werden. Hierzu sind in dem Verbindungselement bzw. umgestülpten Rand des ersten Bauteils vorzugsweise Aussparungen vorgesehen, wie bereits weiter oben näher erläutert.

Insgesamt umfasst die Erfindung insbesondere auch folgende Aspekte:
Der Endbereich einer Luftführung wird umgekrempelt. Dieses definierte Umkrempeln wird durch einen umlaufenden oder segmentartigen Einschnitt oder eine Wanddickenreduzierung ermöglicht. Der umgekrempelte Abschnitt bildet dann im Montageprozess mit einem eingeschobenen oder aufgesteckten benachbarten Bauteil eine formschlüssige Verbindung, insbesondere mit einem Widerhaken-Prinzip. Das anzubindende Montageteil (zweites Bauteil) ist vorzugsweise mit Rasthaken versehen. Für die Verbindung der Bauteile sind somit keine separaten Adaptionsteile erforderlich. Die Luftführung (der Ausgangskörper) ist im Endbereich umlaufend oder segmentartig geschwächt, beispielsweise durch Schneiden, Prägen, Lasern oder Verjüngen. Dies kann während oder nach der Fertigung der Luftführung erfolgen. Bei mehrteiligen Luftführungen (beispielsweise zwei Halbschalen aufweisende Luftführungen) erfolgt die Schwächung vorzugsweise erst nach dem Verschweißen bzw. Extrudieren. Hierdurch wird ein definiertes Umkrempeln ermöglicht.

Insbesondere folgende Merkmale der Erfindung sind hervorzuheben:
1. eine Schwächung (partiell oder umlaufend) im Endbereich der Luftführung,
2. ein Umkrempeln des Abschnitts und
3. eine Fixierung im Widerhaken-Prinzip.

Der sequenzielle oder umlaufende Schnitt kann insbesondere durch Schneiden hergestellt werden (umlaufend messern, kisscut, Laser-Schneiden, Laser mit Gegensensor, Messer mit Auflage/Vorrichtung, Pinchen, Handarbeit, Zackenmesser).

Die Beschnitte/Einschnitte können unterschiedlich tief gestaltet sein. Andere Möglichkeiten der Schwächung sind z. B. Heißprägen (thermische Vertiefung durch Wärmebehandlung/Wärmebelastung), Schnitt oder Schnitte parallel zum eigentlichen Bauteilendbereich (Beschnitt/Stanzen). Weiterhin kann eine Materialschwächung durch Einfräsungen, Einstanzungen und Ausstanzungen vorgesehen sein. Bei mehrschaligen, verschweißen Luftführungen ist es bevorzugt, dass der Einschnittsbereich ebenfalls beschnitten ist. Die Schwächungsebene muss nicht senkrecht zur Luftführungsachse stehen.

Alternativ zu einer Umkrempelung nach innen es auch möglich, den Endbereich nach außen zu krempeln. In diesem Fall ist es bevorzugt, dass die Innenseite der Luftführung einen Beschnitt bzw. eine Verjüngung aufweist.

Die Materialdicke bzw. Wandstärke des rohrförmigen Ausgangskörpers liegt vorzugsweise zwischen etwa 3 und 8 mm, insbesondere 4 - 6 mm, insbesondere etwa 5 mm. Der Querschnitt des rohrförmigen Grundkörpers liegt vorzugsweise zwischen 20 und 100 mm. Eine beispielhafte Ausführungsform sieht einen nichtkreisförmigen Querschnitt mit einem ersten Durchmesser von ca. 50 mm und einem zweiten Durchmesser von ca. 70 mm vor.

Die Erfindung ermöglicht insbesondere das Verbinden von Luftkanälen untereinander oder mit weiteren luftführenden Bauteilen, insbesondere aus dem gleichen Material, ohne zusätzliche Verbindungselemente und ohne zusätzliche Dichtungselemente.

Durch die Erfindung wird eine einfache, dichte und prozesssichere Steckung einer Luftführung (insbesondere aus Schaumfolie bzw. geschäumte Luftführung oder Blasformteil) an eine Peripherie (beispielsweise Ausströmer, Verteilergehäuse, Adapterrahmen oder eine benachbarte Luftführung) mit einem ausreichenden Festsitz ermöglicht.

Die Erfindung bietet insbesondere die folgenden Vorteile:
- eine einteilige Luftführung,
- keine Zusatz-Adapter bzw. zusätzliche Prozess-Schritte,
- Festsitz,
- die Herstellung des erfindungsgemäßen Bauteils ist in den Fertigungsprozess einer Luftführung integrierbar,
- die Verbindung von zwei Bauteilen erfolgt in einem bewährten Sperrprinzip (Rasthaken/Widerhaken),
- es wird eine einfache Fixierung zu benachbarten Bauteilen ermöglicht,
- die Verbindung ist sehr dicht, insbesondere ähnlich eines Radialwellendichtrings. Es gibt keine nennenswerte Leckage. Die Dichtigkeit kann durch eine angestellte Lippenform bzw. ein angestelltes Verbindungselement noch verstärkt werden,
- die Erfindung ist auch für nicht-konzentrische Querschnittsformen anwendbar,
- die Wanddickenverdoppelung durch das Umkrempeln bietet eine erhöhte Randsteifigkeit.

Die Erfindung wird nachfolgend anhand von bevorzugten Ausführungsbeispielen, welche in den beiliegenden, schematischen Figuren dargestellt sind, weiter beschrieben. In den Figuren zeigt:
- Fig. 1: Verfahrensschritte zur Herstellung einer Ausführungsform eines erfindungsgemäßen Bauteils in einer perspektivischen Ansicht und in Schnittansicht;
- Fig. 2: eine Querschnittsansicht einer Ausführungsform eines erfindungsgemäßen Bauteils;
- Fig. 3: Verfahrensschritte zur Herstellung einer Ausführungsform eines erfindungsgemäßen Bauteils und eine Verbindung mit einem weiteren Bauteil in einer Schnittansicht;
- Fig. 4: eine Ausgestaltung eines Endbereichs einer Ausführungsform eines erfindungsgemäßen Bauteils einschließlich dem Zusammenwirken mit einem weiteren Bauteil;
- Fig. 5: eine perspektivische Ansicht und eine Schnittansicht einer weiteren bevorzugten Ausführungsform des erfindungsgemäßen Bauteils;
- Fig. 6: zwei miteinander in erfindungsgemäßer Weise verbundene Bauteile und
- Fig. 7: die Verbindung von zwei Ausführungsformen von Bauteilen miteinander in einer Schnittansicht.

Gleiche oder gleichwirkende Elemente sind in sämtlichen Figuren mit denselben Bezugszeichen gekennzeichnet.

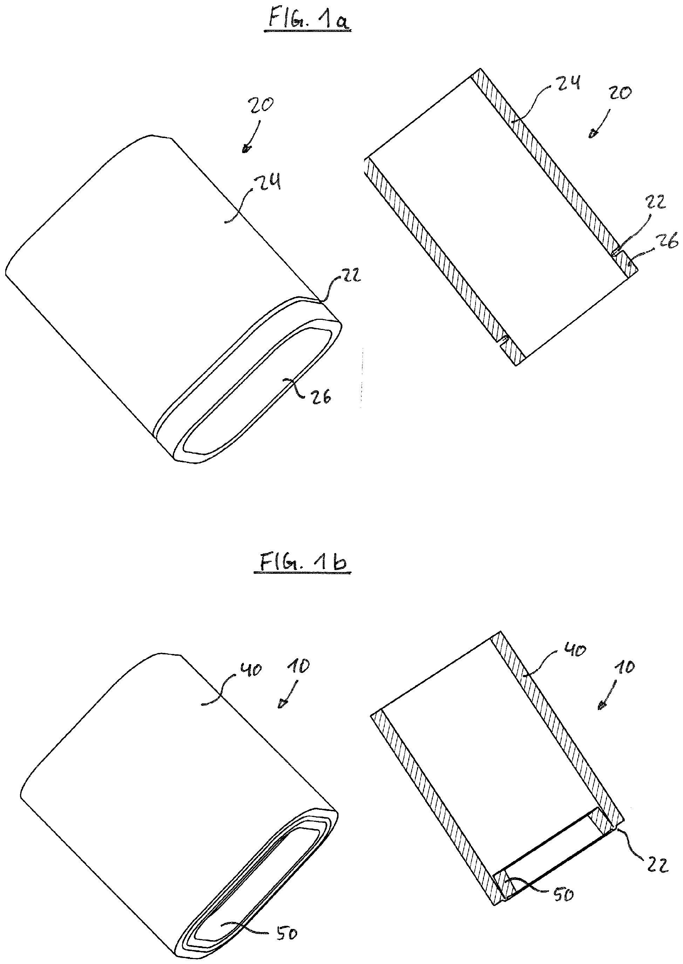

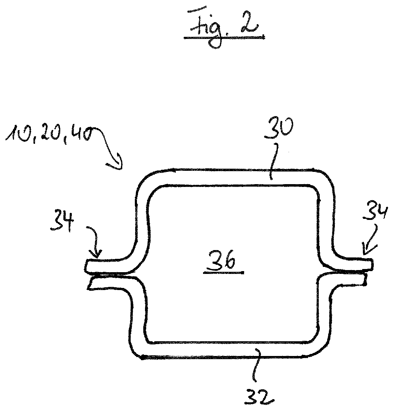

In den Figuren 1a bis 1b ist ein Herstellungsprozess eines erfindungsgemäßen Bauteils 10 dargestellt. Fig. 1a zeigt einen rohrförmigen Ausgangskörper 20, welcher hier als Schaumstoffkörper, insbesondere aus einer Schaumfolie, ausgeführt ist. Der rohrförmige Körper ist vorzugsweise aus zwei Halbschalen 30, 32 gebildet (vgl. Fig. 2), die entlang eines Verschweißrandes 34 miteinander verbunden, insbesondere verschweißt sind. Durch den rohrförmigen Ausgangskörper 20 wird ein Strömungskanal 36 definiert.

Der Ausgangskörper 20 weist an einem axialen Endbereich eine umlaufende, (durchgehende oder unterbrochene) Materialschwächung 22 auf, die den rohrförmigen Ausgangskörper 20 in einen Basisabschnitt 24 und einen Umformabschnitt 26 unterteilt. Die Materialschwächung 22 kann beispielsweise durch einen umlaufenden Einschnitt, beispielsweise in einer Außenfläche des Ausgangskörpers 20, gebildet sein.

In der dargestellten Ausführungsform wird der Umformabschnitt 26 nach innen eingestülpt. Grundsätzlich ist aber auch ein Einstülpen oder Einstülpen nach außen möglich. Der Verschweißrand 34 ist im Bereich des Umformabschnitts 26 beschnitten. Mit anderen Worten kann der Verschweißrand 34 im Bereich des Umformabschnitts 26 zumindest teilweise, vorzugsweise vollständig entfernt sein. Dies ermöglicht das Umkrempeln bzw. Umstülpen des Umformabschnitts 26 bei einem aus zwei Halbschalen 30, 32 gebildeten Ausgangskörpers 20 trotz des vorhandenen Verschweißrandes 34.

Fig. 1b zeigt schließlich das fertige Bauteil 10. Dieses umfasst einen rohrförmigen Grundkörper 40, welcher aus dem Basisabschnitt 24 des rohrförmigen Ausgangskörpers 20 gebildet wird, sowie ein Verbindungselement 50, welches durch den umgestülpten Umformabschnitt 26 des rohrförmigen Ausgangskörpers 20 gebildet wird.

Fig. 2 zeigt eine Querschnittsansicht des Basisabschnitts 24 des rohrförmigen Ausgangskörpers 20 bzw. eine Querschnittsansicht des rohrförmigen Grundkörpers 40 des Bauteils 10. Es ist zu erkennen, dass die beiden Halbschalen 30, 32 jeweils eine nach außen weisende Auskragung aufweisen. Die miteinander verbundenen Auskragungen bilden den Verschweißrand 34, der sich in Längsrichtung (Axialrichtung) des Ausgangskörpers 20 bzw. Grundkörpers 40 erstreckt.

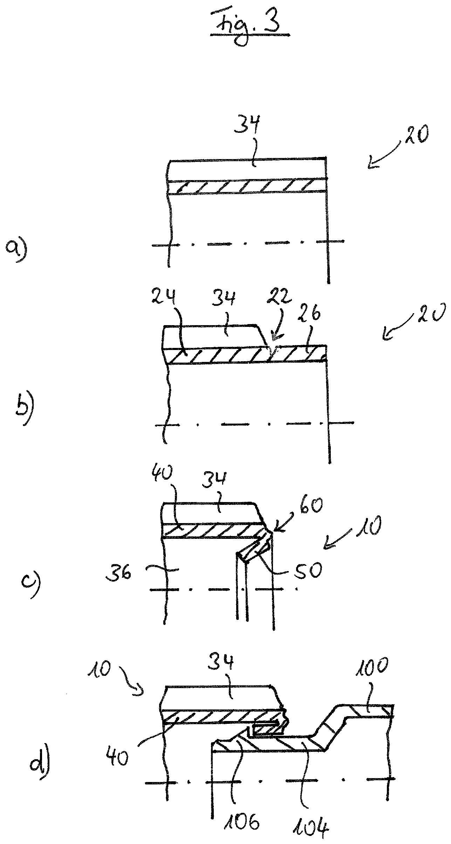

In Fig. 3 ist ein erfindungsgemäßes Bauteil 10 sowie seine formschlüssige Verbindung mit einem zweiten Bauteil 100 dargestellt. Die Fig. 3a zeigt einen rohrförmigen Ausgangskörper 20, welcher aus zwei Halbschalen 30, 32 gebildet ist und einen in Längsrichtung des Ausgangskörpers 20 verlaufenden Verschweißrand 34 aufweist. Zur Herstellung des erfindungsgemäßen Bauteils 10 wird der Verschweißrand 34 an einem axialen Endbereich zumindest weitgehend entfernt bzw. abgeschnitten. Außerdem wird entlang einer Umfangsrichtung des rohrförmigen Ausgangskörpers 20 eine Materialschwächung 22 eingebracht, beispielsweise durch Einschneiden des rohrförmigen Ausgangskörpers 20. Durch die Bearbeitung des rohrförmigen Ausgangskörpers 20, insbesondere die Materialschwächung 22 und/oder das abgeschnittene Ende des Verschweißrandes 34, wird der rohrförmige Ausgangskörper 20 in einen Basisabschnitt 24 und einen Umformabschnitt 26 unterteilt.

Der rohrförmige Ausgangskörper 20 kann grundsätzlich eine beliebige Querschnittsform aufweisen, beispielsweise eckig, rund, kreisrund, elliptisch, polygonal oder eine beliebige Kombination hiervon.

Fig. 3b entspricht im Wesentlichen einer Querschnittsansicht des in Fig. 1a dargestellten Bauteils.

Fig. 3c zeigt in einer Querschnittsansicht das Einstülpen bzw. Umkrempeln des Umformabschnitts 26, analog zu Fig. 1b. In der Querschnittsansicht ist zu erkennen, dass zwischen dem Basisabschnitt 24 bzw. dem rohrförmigen Grundkörper 40 und dem Umformabschnitt 26 bzw. dem Verbindungselement 50 ein Übergangsabschnitt 60 gebildet ist, entlang welchem der Ausgangskörper 20 bzw. das Bauteil 10 abgewinkelt ist. Der Übergangsabschnitt 60 weist eine geringere Materialstärke auf als die angrenzenden Abschnitte bzw. der rohrförmige Grundkörper 40 und das Verbindungselement 50 und bildet ein elastisches Gelenk oder Scharnier. Fig. 3c zeigt ein fertiges, erfindungsgemäßes Bauteil 10.

In Fig. 3d ist die formschlüssige Verbindung des Bauteils 10 mit einem zweiten Bauteil 100 dargestellt. Das zweite Bauteil 100 umfasst einen rohrförmigen Grundkörper 104, an dessen Außenumfang mindestens ein Rastelement 106 in Form eines Vorsprungs angeordnet ist. Das Rastelement 106 kann vollständig oder teilweise umlaufend entlang des rohrförmigen Grundkörpers 104 ausgebildet sein. Durch Ineinanderstecken der Bauteile 10, 100 wird eine formschlüssige Verbindung erzielt, wobei das Verbindungselement 50 während des Einsteckens zunächst das Rastelement 106 passiert und dieses anschließend durch eine rückfedernde Bewegung hintergreift. Somit wird ein erneutes Lösen der formschlüssigen Verbindung verhindert. Das Verbindungselement 50 ist entlang des Übergangsabschnitts 60 federnd an den rohrförmigen Grundkörper 40 gelagert und drückt in radiale Richtung gegen den Außenumfang des zweiten Bauteils 100. Auf diese Weise wird ein abgedichteter Zustand zwischen den Bauteilen 10, 100 hergestellt. Hierbei bildet insbesondere eine distale Kante des Verbindungselements 50 eine Abdichtfläche bzw. Abdichtlinie.

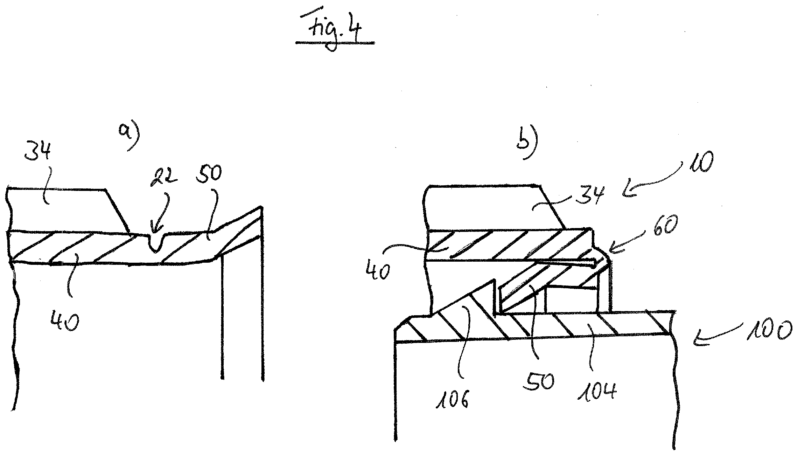

Fig. 4 zeigt eine Ausführungsform eines erfindungsgemäßen Bauteils 10 mit einem abgewandelten Endbereich zur Verbesserung der Abdichtung gegenüber dem zweiten Bauteil 100. Fig. 4a zeigt einen abgewandelten Ausgangskörper 20 in einer Darstellung entsprechend Fig. 3b. Die Darstellung gemäß Fig. 4b entspricht im Wesentlichen einem Verbindungszustand der Bauteile 10, 100, wie er in Fig. 3d veranschaulicht ist. Zur Erzielung eines erhöhten Anpressdrucks des Verbindungselements 50 gegen das zweite Bauteil 100 ist das Verbindungselement 50 im Unterschied zur Fig. 3d im Längsschnitt abgewinkelt oder gebogen. In Fig. 4b ist zu erkennen, dass das Verbindungselement 50 vom Übergangsabschnitt 60 zum distalen Ende in Richtung des zweiten Bauteils 100 gebogen oder abgewinkelt ist. Hierzu ist bereits der Umformabschnitt 26 des rohrförmigen Ausgangskörpers 20 gebogenen oder abgewinkelt. In der dargestellten beispielhaften Ausführungsform ist er als Aufweitung gestaltet. Durch Umkrempeln des gebogenen bzw. abgewinkelten Umformabschnitts wird ein entsprechend gebogenes bzw. winkelförmiges Verbindungselement 50 gebildet. Die angestellte Dichtlippenform bietet eine verbesserte Verkeilung mit dem Rasthaken. Zudem wird eine erhöhte Dichtwirkung erzielt.

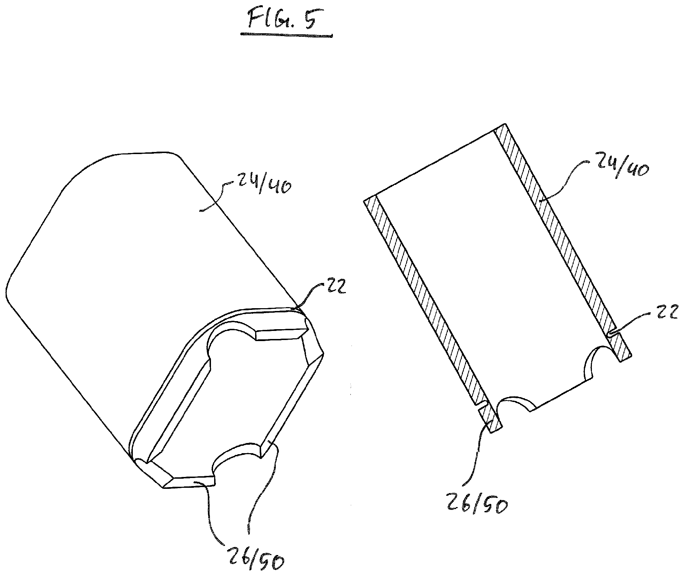

Fig. 5 zeigt eine weitere Ausgestaltung eines erfindungsgemäßen Bauteils 10 zur Verbindung mit einem weiteren Bauteil. Wie ersichtlich umfasst das Bauteil 10 eine Vielzahl von umfänglich angeordneten Verbindungselementen 50. Die Verbindungselemente 50 sind im wesentlichen in Form von Laschen ausgebildet, welche über die Materialschächungen 22 nach Außen oder, wie dargestellt, nach Innen umklappbar sind bzw. umgeklappt werden bzw. einstülpbar sind bzw. eingestülpt werden. In einer bevorzugten Ausführungsform sind die Materialschächungen 22 derart vorgesehen, dass diese sich nicht über die vollständige umfängliche Erstreckung der Laschen erstrecken. Das weitere Bauteil kann ebenfalls aus einem Schaumstoffmaterial bzw. Schaumkörper gebildet sein, beispielsweise einer Schaumfolie. Insbesondere ist vorgesehen, dass die Bauteile aus dem gleichen Material gebildet sind oder bestehen. Das weitere Bauteil umfasst einen rohrförmigen Grundkörper und ein Rastelement entlang nur eines Teils seines Umfangs, das - analog zur Herstellung des Verbindungselements 50 - durch Umbiegen bzw. Umstülpen eines axialen Endbereichs des weiteren Bauteils gebildet ist. Das Rastelement ist nach außen umgebogen, so dass es sich mit dem an der Innenseite des Grundkörpers 40 angeordneten Verbindungselement 50 verhaken kann. Hierzu wird das weitere Bauteil in das Bauteil 10 eingesteckt. Grundsätzlich ist aber auch eine umgekehrte Anordnung möglich, d. h. ein am Außenumfang des rohrförmigen Grundkörpers 40 angeordnetes Verbindungselement 50 und ein am Innenumfang des rohrförmigen Grundkörpers angeordnetes Rastelement.

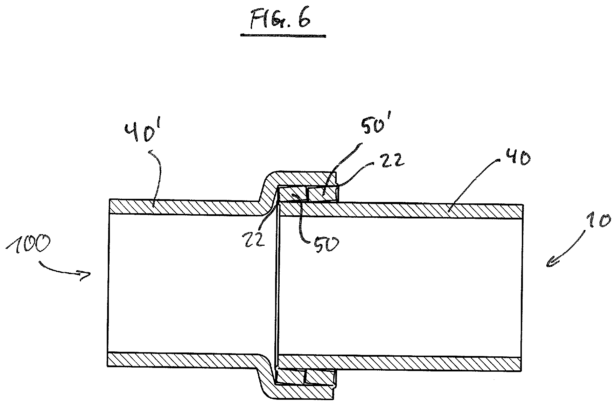

Fig. 6 zeigt eine stabile und leckagedichte Verbindung der Bauteile 10, 100, welche durch Ineinanderstecken der Bauteile 10, 100 hergestellt ist.

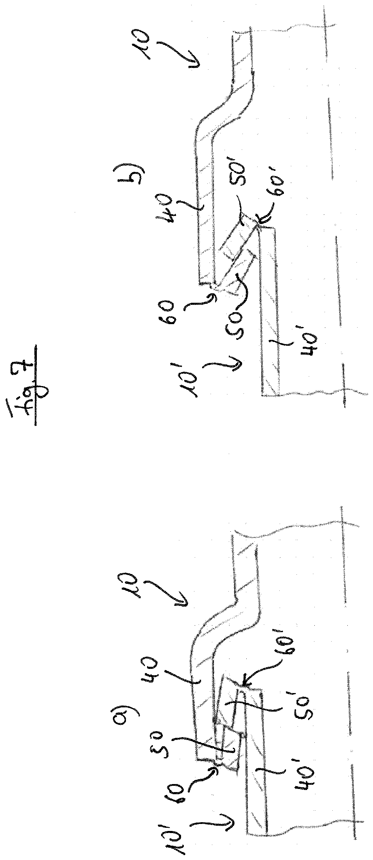

Fig. 7 zeigt die formschlüssige Verbindung von zwei erfindungsgemäßen Bauteilen 10, 10'. Bei einem ersten erfindungsgemäßen Bauteil 10 ist das integral mit dem rohrförmigen Grundkörper 40 gebildete Verbindungselement 50 an einer Außenseite des rohrförmigen Grundkörpers 40 angeordnet. Das Bauteil 10 wurde also durch Umkrempeln bzw. Umstülpen eines Umformabschnitts 26 nach außen gebildet. Ein zweites erfindungsgemäßes Bauteil 10' entspricht im Wesentlichen der Fig. 1 und wurde durch Umkrempeln bzw. Umstülpen eines Umformabschnitts 26 nach innen gebildet. Die Bauteile 10, 10' sind ineinander steckbar. Durch die jeweiligen Verbindungselement 50, 50' werden die Bauteile 10, 10' formschlüssig miteinander verbunden. Dabei sperren sich die umgekrempelten Endbereiche (Verbindungselemente 50, 50') gegenseitig. Die Verbindungselemente 50, 50' können hierbei auch entsprechend der Fig. 4 ausgebildet sein. Durch die Verbindungselemente 50, 50' werden Dichtelemente gebildet. Die Dichtlippenform bewirkt eine erhöhte Dichtwirkung.

Das Rastelement 106 in Fig. 3 bildet eine partielle Haltelasche. Durch Ineinanderstecken der Bauteile 10, 100 wird eine gesteckte Luftführung hergestellt. Dabei sind die jeweiligen Endbereiche der rohrförmigen Grundkörper 40 bzw. Ausgangskörper 20 nach innen bzw. nach außen umgekrempelt.

Fig. 7 zeigt die Verbindung von zwei erfindungsgemäßen Schaumluftführungen bzw. Bauteilen 10, 10'. Hierbei sind keine separaten Adaptionsteile bzw. Verklebungen und/oder Verschweißungen erforderlich. Bei einer ersten Luftführung wird der Endbereich nach außen gekrempelt und bei einer zweiten Luftführung nach innen. Nach dem Fügen beider Luftführungen erfolgt Formschluss, so dass ein Festsitz gesichert ist. Die Verbindungselemente 50, 50' bilden Lippen, die aufgrund der Vorspannung gut gegen die benachbarte Luftführungswand dichten. Der Endbereich der nach außen gekrempelten Luftführung hat das Bestreben, sich wieder in die Ausgangsform zurückzuformen. Somit entsteht eine gezielte Vorspannung der Lippe (des Verbindungselements). Mit anderen Worten besteht das Bestreben, den Radienbereich (Übergangsabschnitt 60) zu strecken.

## Patentansprüche

1. Luftkanal für eine Heizungs-, Lüftungs- und/oder eine Klimatisierungseinrichtung eines Fahrzeugs, aufweisend einen rohrförmigen Grundkörper (40) und ein integral bzw. einstückig mit dem rohrförmigen Grundkörper (40) gebildetes und/oder bildbares Verbindungselement (50) zum formschlüssigen Verbinden mit einem weiteren Bauteil,
wobei der rohrförmige Grundkörper (40) und das Verbindungselement (50) aus einem elastischen Material ausgebildet sind, und wobei das Verbindungselement (50) durch Umformen des rohrförmigen Grundkörpers (40) gebildet oder bildbar ist,
wobei der rohrförmige Grundkörper (40) in einem Grundzustand eine zumindest teilweise umlaufende Materialschwächung (22) aufweist, entlang welcher der rohrförmige Grundkörper (40) zum Bilden des Verbindungselements (50) umformbar oder umgeformt ist, **dadurch gekennzeichnet, dass** die Materialschwächung (22) als Perforation, als unterbrochener Schnitt, als zackenförmige Materialverdünnung und/oder als thermisch induzierte Schwächung ausgebildet ist.

2. Luftkanal nach Anspruch 1,
wobei das Verbindungselement (50) durch Umformen eines axialen Endbereichs des rohrförmigen Grundkörpers (40) ausgebildet oder ausbildbar ist, wobei das Umformen des axialen Endbereichs des rohrförmigen Grundkörpers (40) zweckmäßigerweise um mehr als 90°, vorzugsweise mehr als 135°, erfolgt.

3. Luftkanal nach einem der vorhergehenden Ansprüche,
wobei das Verbindungselement (50) an einer inneren und/oder äußeren Umfangsfläche des rohrförmigen Grundkörpers (40) ausgebildet oder ausbildbar ist.

4. Luftkanal nach einem der vorhergehenden Ansprüche,
wobei der rohrförmige Grundkörper (40) aus einem geschäumten Material, vorzugsweise einem geschlossenzelligen Schaumstoff, gebildet ist.

5. Luftkanal nach einem der vorhergehenden Ansprüche,
wobei das Verhältnis der Materialstärke des rohrförmigen Grundkörpers (40) zum Abstand der Materialschwächung (22) vom axialen Ende des rohrförmigen Grundkörpers (40) in einem nicht umgeformten Grundzustand kleiner als 0,5, bevorzugt kleiner als 0,3, ist.

6. Luftkanal nach einem der vorhergehenden Ansprüche,
wobei der rohrförmige Grundkörper (40) aus mindestens zwei miteinander verbundenen Schalen gebildet ist.

7. Luftkanal nach einem der vorhergehenden Ansprüche,
wobei das Verbindungselement (50) in einem Längsschnitt eine gebogene und/oder abgewinkelte und/oder angestellte Form aufweist.

8. Luftkanal nach einem der vorhergehenden Ansprüche,
wobei der rohrförmige Luftkanal mehrere Verbindungselemente (50) aufweist, welche vorzugsweise in Form von umfänglich angeordneten, zweckmäßigerweise beabstandeten, Laschen ausgebildet sind.

9. Anordnung von Bauteilen (10, 100),
wobei mindestens ein erstes Bauteil als Luftkanal gemäß einem der Ansprüche 1 bis 8 ausgebildet ist, und wobei der Luftkanal formschlüssig mit einem zweiten Bauteil (10, 100) verbunden und/oder verbindbar ist.

10. Anordnung nach Anspruch 9,
wobei das zweite Bauteil (10, 100) entlang zumindest eines Teils seines Umfangs ein Rastelement (106) aufweist, mittels welchem das Verbindungselement (50) des Luftkanals formschlüssig verbunden und/oder verbindbar ist.

11. Anordnung nach einem der Ansprüche 9 oder 10,
wobei der Luftkanal lösbar mit dem zweiten Bauteil (10, 100) verbunden und/oder verbindbar ist.

## Claims

1. Air duct for a heating, ventilation, and/or of an air-conditioning installation of a vehicle, having a tubular main body (40) and
a connection element (50) for connecting in a form-fitting manner to a further component, said connection element being created and/or capable of being created integrally or as one piece, respectively, with the tubular main body (40), wherein the tubular main body (40) and the connection element (50) are configured from an elastic material, and
wherein the connection element (50) is created or is capable of being created by forming the tubular main body (40),
wherein the tubular main body (40) in a basic state has an at least partially encircling material weakening (22) along which the tubular main body (40) is capable of being formed or is formed in order for the connection element (50) to be created, **characterized in that** the material weakening (22) is configured as a perforation, as an interrupted cut, as a serrated material thinning, and/or as a thermally induced weakening.

2. Air duct according to Claim 1,
wherein the connection element (50) is configured or is capable of being configured by forming an axial end region of the tubular main body (40), wherein the forming of the axial end region of the tubular main body (40) is expediently performed by more than 90°, preferably more than 135°.

3. Air duct according to one of the preceding claims, wherein the connection element (50) is configured or is capable of being configured on an internal and/or external circumferential face of the tubular main body (40).

4. Air duct according to one of the preceding claims, wherein the tubular main body (40) is created from a foamed material, preferably from a closed-cell foam material.

5. Air duct according to one of the preceding claims, wherein, in a non-formed basic state, the ratio of the material thickness of the tubular main body (40) to the spacing of the material weakness (22) from the axial end of the tubular main body (40)is less than 0.5, preferably less than 0.3.

6. Air duct according to one of the preceding claims, wherein the tubular main body (40) is created from at least two interconnected shells.

7. Air duct according to one of the preceding claims, wherein the connection element (50) in a longitudinal section has a curved and/or angular and/or inclined shape.

8. Air duct according to one of the preceding claims, wherein the tubular air duct has a plurality of connection elements (50) which are preferably configured in the form of circumferentially disposed and expediently spaced apart lugs.

9. Assembly of components (10, 100)
wherein at least one first component is configured as an air duct according to one of Claims 1 to 8,
and wherein the air duct is connected and/or is capable of being connected in a form-fitting manner to a second component (10, 100).

10. Assembly according to Claim 9,
wherein the second component (10, 100) along at least part of the circumference thereof has a latching element (106) by means of which the connection element (50) of the air duct is connected and/or is capable of being connected in a form-fitting manner.

11. Assembly according to one of Claims 9 and 10, wherein the air duct is releasably connected and/or capable of being releasably connected to the second component (10, 100).

## Revendications

1. Canal à air pour un dispositif de chauffage, de ventilation et/ou de climatisation pour un véhicule, comportant
un corps de base (40) tubulaire et
un élément de liaison (50) réalisé et/ou susceptible d'être réalisé intégralement ou d'un seul tenant avec le corps de base tubulaire (40) et destiné à la liaison par coopération de forme avec un autre composant, dans lequel
le corps de base tubulaire (40) et l'élément de liaison (50) sont réalisés d'un matériau élastique, et
l'élément de liaison (50) est réalisé ou susceptible d'être réalisé par mise en forme du corps de base tubulaire (40),
dans un état de base, le corps de base tubulaire (40) présente un affaiblissement de matériau au moins partiellement périphérique (22) le long duquel le corps de base tubulaire (40) est mis en forme ou susceptible d'être mis en forme pour constituer l'élément de liaison (50),
**caractérisé en ce que**
l'affaiblissement de matériau (22) est réalisé sous la forme d'une perforation, d'une coupe interrompue, d'un amincissement de matériau en forme de dent et/ou d'un affaiblissement induit thermiquement.

2. Canal à air selon la revendication 1,
dans lequel
l'élément de liaison (50) est réalisé ou susceptible d'être réalisé par mise en forme d'une zone d'extrémité axiale du corps de base tubulaire (40), la mise en forme de la zone d'extrémité axiale du corps de buse tubulaire (40) ayant lieu judicieusement sur plus de 90°, de préférence sur plus de 135°.

3. Canal à air selon l'une des revendications précédentes,
dans lequel
l'élément de liaison (50) est réalisé ou susceptible d'être réalisé sur une surface périphérique intérieure et/ou extérieure du corps de base tubulaire (40).

4. Canal à air selon l'une des revendications précédentes,
dans lequel
le corps de base tubulaire (40) est formé d'un matériau moussé, de préférence d'une mousse à cellules fermées.

5. Canal à air selon l'une des revendications précédentes,
dans lequel
le rapport de l'épaisseur du matériau du corps de base tubulaire (40) sur la distance de l'affaiblissement de matériau (22) depuis l'extrémité axiale du corps de base tubulaire (40) est inférieur à 0,5, de préférence inférieur à 0,3, dans un état de base non déformé.

6. Canal à air selon l'une des revendications précédentes,
dans lequel
le corps de base tubulaire (40) est formé d'au moins deux coques reliées l'une à l'autre.

7. Canal à air selon l'une des revendications précédentes,
dans lequel
l'élément de liaison (50) présente en coupe longitudinale une forme recourbée et/ou coudée et/ou redressée.

8. Canal à air selon l'une des revendications précédentes,
dans lequel
le canal à air tubulaire comprend plusieurs éléments de liaison (50) qui sont réalisés de préférence sous la forme de pattes agencées périphériquement, judicieusement espacées.

9. Agencement de composants (10, 100),
dans lequel
au moins un premier composant est réalisé sous la forme d'un canal à air selon l'une des revendications 1 à 8, et le canal à air est relié et/ou susceptible d'être relié par coopération de forme à un second composant (10, 100).

10. Agencement selon la revendication 9,
dans lequel
au moins sur une partie de sa périphérie, le second composant (10, 100) comprend un élément d'enclenchement (106) au moyen duquel l'élément de liaison (50) du canal à air est relié et/ou est susceptible d'être relié par coopération de forme.

11. Agencement selon l'une es revendications 9 ou 10,
dans lequel
le canal à air est relié ou susceptible d'être relié de façon détachable au second composant (10, 100).
